# EUROPEAN PATENT SPECIFICATION

(11) **EP 3 013 771 B1**
(45) Date of publication and mention of the grant of the patent: **05.08.2020**
(21) Application number: 14790795.0
(22) Date of filing: 03.04.2014
(51) Int. Cl.: C04B 35/628, C04B 41/00, C04B 41/50, C04B 41/48, D02G 3/40, D02G 3/18, C03C 25/16, C03C 25/18, C03C 25/26, C03C 25/42

(54) **WHISKER-REINFORCED HYBRID FIBER BY METHOD OF BASE MATERIAL INFUSION INTO WHISKER YARN**
DURCH EIN VERFAHREN ZUR BASISMATERIALINFUSION IN EIN WHISKERGARN WHISKER-VERSTÄRKTE HYBRIDFASER
FIBRE HYBRIDE RENFORCÉE PAR FIBRILLES OBTENUE PAR UN PROCÉDÉ DE PÉNÉTRATION D'UN MATÉRIAU DE BASE DANS UN FIL FIBRILLÉ

(30) Priority: 28.06.2013 US 201313930637
(43) Date of publication of application: 04.05.2016
(73) Proprietor: The Boeing Company, Chicago, IL 60606-1596 (US)
(72) Inventor: HULL, John R., Chicago, Illinois 60606-2016 (US); WILENSKI, Mark S., Chicago, Illinois 60606-2016 (US)
(74) Representative: Boult Wade Tennant LLP
(86) International application number: PCT/US2014/032869
(87) International publication number: WO 2014/209461

(56) References cited:
- EP-A1- 1 568 664
- EP-A1- 1 818 443
- US-A1- 2007 036 709
- US-A1- 2007 257 859
- US-A1- 2008 020 193
- US-A1- 2011 014 467
- US-A1- 2011 186 775
- US-A1- 2013 104 515

## Description

### FIELD

The present invention pertains to a hybrid fiber consisting of a conventional polymer or glass fiber that is reinforced with fibrils distributed throughout the fiber. More specifically, the invention pertains to a hybrid fiber consisting of a polymer or glass that is reinforced by fibrils woven into a yarn that extends through the hybrid fiber interior and is coated and infused with the polymer or glass.

### BACKGROUND

Glass fibers, graphite fibers, silicon carbide fibers, and polymer fibers, among others, are used extensively in modern fiber composites. These composites have been used in a variety of different products, for example building materials such as deck planking and rails, in sporting goods such as golf clubs, and in structural components of automobiles and aircraft such as, for example, body panels and rotor blades.

The composite is generally formed by placing a plurality of the fibers in a liquefied polymer base material such as a thermoset or a thermoplastic. The polymer base material is then caused to solidify. The plurality of fibers reinforce the solidified polymer base material. Other potential base materials that are reinforced by fibers include glass, ceramic, and metals.

The placement of the plurality of fibers in the liquefied base materials can be in the form of layers of the fibers with the fibers in each layer being arranged in a uniaxial direction or substantially parallel, or layers of fibers with the fibers in each layer being formed by a weave geometry of the fibers.

Examples of thermoset base materials that are reinforced with fibers include polyester, vinylester, epoxy, bismalemide, polyimide, phenolicester and cyanateester. Examples of thermoplastic base materials that are reinforced with fibers include polycarbonate, polyphenylene sulfide, polyether-etherketone, polyether-ketone-ketone, and polyetherimide.

In general, there is evidence that incorporation of reinforcing fibers into a glass base material can provide both increases in tensile strength and elastic modulus. This is disclosed in the U.S. Patent of Brennan et al. No. 4,314,852, incorporated herein by reference.

However, fibers, composed of a single material, have limited properties. Sometimes a second material is employed as a reinforcement on the outside of the fiber material. This method however results in limited improvement of desired fiber properties. Placing reinforcement inside of the fiber material has resulted in a small percentage of the fiber interior being occupied by the reinforcement and a minimal alignment of the reinforcement in a desired direction, for example along the fiber axis.

EP 1568664 discloses carbon particles, such as, carbon fibrils and carbon nanotube molecules, assembled into aligned fibers using processes derived from the processes used to manufacture optical fiber. More particularly, the carbon particles are embedded in glass, which is then drawn to align them. By aligned it is meant the axis along the longest dimension of each of the various particles in a local vicinity are substantially parallel.

US 2007/0036709 discloses a system that receives nanomaterials, forms nanofibrous materials therefrom, and collects these nanofibrous materials for subsequent applications. The system is coupled to a chamber that generates nanomaterials, typically carbon nanotubes produced from chemical vapor deposition, and includes a mechanism for spinning the nanotubes into yarns or tows. Alternatively, the system includes a mechanism for forming non-woven sheets from the nanotubes. The system also includes components for collecting the formed nanofibrous materials. Methods for forming and collecting the nanofibrous materials are also provided.

US 2007/0257859 discloses an antenna for the transmission and reception of electromagnetic radiation. The antenna includes a body portion, which can be flexible to permit incorporation of the antenna into a material. The antenna also includes an aggregate of extended length nanotubes along the body portion, and a plurality of contact points between adjacent nanotubes to permit transmission of electromagnetic radiation, while reducing resistivity along the antenna at a high frequency, for example, above 100 MHz. A method of manufacturing an antenna is also disclosed.

### SUMMARY

In a first aspect, the invention provides a hybrid fiber comprising:
a base material permeating an interior of the hybrid fiber and a length of the hybrid fiber; and,
a plurality of fibrils distributed throughout the base material, each fibril of the plurality of fibrils having a length that is a fraction of the hybrid fiber length and is aligned with the hybrid fiber length; and
the plurality of fibrils being formed into a yarn with the base material being infused into the yarn wherein:
   a volume percentage of the plurality of fibrils in the hybrid fiber is in a range of 30 percent to 80 percent.

In a second aspect, the invention provides a method of making a hybrid fiber comprising:
aligning and overlapping a plurality of fibrils forming a continuous yarn having a yarn length where each fibril of the plurality of fibrils has a fibril length that is aligned with the yarn length and is a fraction of the yarn length;
successively coating the yarn with a liquid base material and infusing the liquid base material into the plurality of fibrils forming the yarn; and,
allowing the liquid base material coating the yarn and infused in the plurality of fibrils forming the yarn to solidify resulting in the hybrid fiber such that a volume percentage of the plurality of fibrils in the hybrid fiber is in a range of 30 percent to 80 percent.

### FURTHER ASPECTS OF THE DISCLOSURE

Also disclosed is a single base material fiber with reinforcement where the reinforcement is distributed throughout the interior of the fiber and is primarily aligned with the axis or length of the fiber. The present invention also provides a fiber having a high percentage of the fiber interior volume being occupied by the reinforcement within the fiber.

This overcomes disadvantages associated with composite base material reinforced with fibers by providing a hybrid fiber to be used in reinforcing a composite base material where the hybrid fiber construction and the method of making the hybrid fiber are unique.

The hybrid fiber may be basically comprised of a pure base material that permeates a length of the hybrid fiber. In a preferred aspect, the base material is glass. Alternative material could be polymer.

A plurality of fibrils or nanotubes are distributed throughout the base material. The nanotubes are interwoven into a yarn that extends the length of the hybrid fiber. Each nanotube has a length that is aligned with the length of the hybrid fiber. The length of each nanotube is a fraction of the length of the hybrid fiber. In a preferred embodiment the nanotubes are carbon nanotubes. Additionally, in the preferred embodiment the volume percentage of the plurality of nanotubes in the hybrid fiber is in a range of 10% to 90%, and preferably 30% to 80%.

The method of making the hybrid fiber involves aligning and overlapping a plurality of the nanotubes forming a continuous strand or yarn of the nanotubes having a strand length. In the strand of nanotubes, each nanotube of the plurality of nanotubes has a length that is aligned with the strand length and is a fraction of the strand length. In a preferred embodiment the plurality of nanotubes are twisted or woven into a length of yarn.

The strand or yarn length is then successively coated with a flowable base material that infuses into the plurality of nanotubes of the strand or yarn.

The coating of the strand or yarn length with the liquid base material can be accomplished by containing the liquid base material in a container having a nozzle opening, and then pulling the strand or yarn through the nozzle opening and into the liquid base material in the container. Pulling the strand or yarn through the liquid base material successively coats the strand or yarn with the liquid base material and infuses the liquid base material into the plurality of nanotubes forming the strand or yarn.

Alternatively, the strand or yarn could be pulled over a rotating cylindrical surface while pouring the liquid base material onto the surface and the strand or yarn. This successively coats the strand or yarn length with the liquid base material and infuses the liquid base material into the plurality of nanotubes forming the strand or yarn.

The strand or yarn coated and infused with the liquid base material is then caused to solidify, thereby completing the method of making the hybrid fiber of the invention.

### BRIEF DESCRIPTION OF THE DRAWINGS

Further features of the hybrid fiber of the invention and its method of construction are set forth in the following description of the fiber and method and in the drawing figures.
Figure 1 is a schematic representation of a longitudinal cross-section of a portion of a fiber reinforced with whiskers where the whiskers make up only a small volume fraction of the hybrid fiber.
Figure 2 is a schematic representation of a portion of the yarn length of interwoven nanotubes. Figure 3 is a schematic representation of a portion of the length of the hybrid fiber.
Figure 3 is a schematic representation of a portion of the length of the hybrid fiber.
Figure 4 is a schematic representation of a method of producing the hybrid fiber.
Figure 5 is a schematic representation of a method of producing the hybrid fiber.

### DETAILED DESCRIPTION

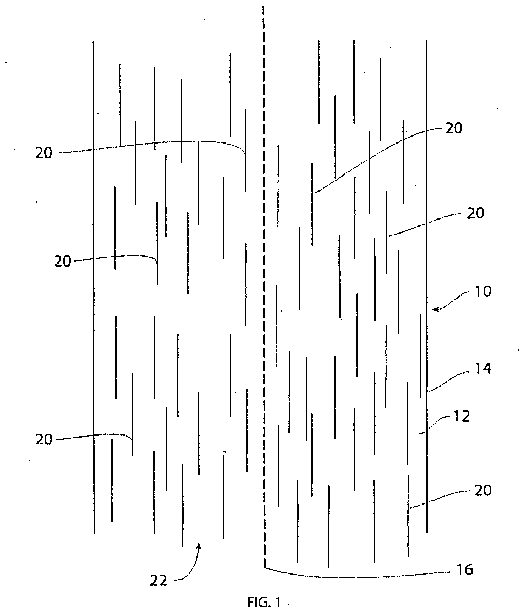

Figure 1 is a representation of a basic embodiment of a hybrid fiber. Figure 1 shows a hybrid fiber of glass base material that is fibril reinforced by a plurality of isolated fibrils.

Figure 1 is a representation of a cross-section of a portion of the hybrid fiber length. In the actual hybrid fiber 10, the fiber is surrounded by a generally cylindrical exterior surface 14 having a center axis 16 that extends along the fiber length. The hybrid fiber 10 is basically comprised of a base material 12 that forms the overall fiber body. The base material 12 is a pure material, for example a pure glass. In the example shown in Figure 1 the base material is glass. Other known fiber base materials could also be used in the hybrid fiber 10.

A plurality of individual isolated fibrils 20 is distributed throughout the base material 12. The fibrils 20 can be small filaments, nanotubes such as carbon nanotubes, boron nitride nantotubes, whiskers such as silicon carbide or others. The fibrils 20 are primarily distributed through the interior 22 of the hybrid fiber 10, but some of the fibrils 20 could also be distributed along and around the fiber exterior surface 14. The plurality of fibrils 20 each have a length that is substantially aligned with the length or axis 16 of the hybrid fiber 10.

The fibrils 20 are materials that have better properties, such as tensile strength, compressive strength, elastic modulus (mechanical stiffness), electrical conductivity, and dielectric coefficient, among others, than the base material 12 of the hybrid fiber 10. However, the materials of the fibrils 20 cannot be grown in the length or size desired for the fibrils 20 to be used in a fiber composite. An example of such a material of the fibrils 20 is a nanotube. In the exemplary embodiment of the hybrid fiber 10 shown in Figure 1, the fibrils 20 are carbon nanotubes, either single wall or multi wall. The longest carbon nanotubes that have been made to date are of the order of a centimeter in length, whereas the fibers used in most fiber composites are continuous. Other fibril materials include silicone carbide and boron nitride. The material of the fibrils 20 must be chemically compatible with the base material 12 of the hybrid fiber 10. The material of the fibrils 20 must not degrade at temperatures at which the glass or other base material 12 can flow to form the final shape of the hybrid fiber 10.

The basic technology for spinning short lengths of filaments into a longer length of yarn has been known for some time in the textile industry. In general, the length of a piece of yarn can be greater than the lengths of any individual filament woven into and composing the yarn. In the present invention, this basic technology is employed to create yarns from very small diameter fibrils, such as carbon nanotubes.

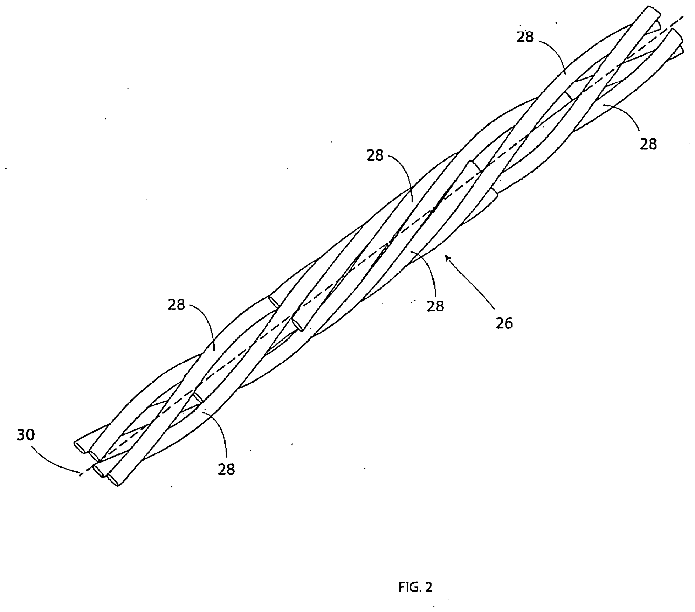

Figure 2 is a representation of a portion of a length of yarn 26. The yarn 26 is created from two or more individual fibrils 28. In general, the length of yarn 26 has a center axis 30 when the yarn is held straight, and the fibrils 28 have lengths that are predominantly aligned with the yarn center axis 30. As represented in Figure 2, the fibrils 28 may twist around the yarn center axis 30 within the yarn 26. It should be understood that in Figure 2, only a segment of the yarn length 26 is shown. Some of the fibrils 28 have been removed from the representation of the opposite ends of the segment of yarn 26 to better show the twisted or interwoven structure of the yarn. The yarn 26 formed from the fibrils 28 has a similar structure to a conventional yarn composed of fibers, with the primary difference being that the fibrils 28 have a smaller diameter and length, compared to conventional fibers of a conventional yarn. For example, conventional carbon fibers may have a diameter of 3-50 microns, whereas carbon nanotube fibrils 28 may have a diameter of 1-100 nanometers. For point of reference, the diameter of an atom ranges from about 0.1-0.5 nanometer. The diameter of the fibrils 28 could be as large as 5 microns if a large diameter hybrid fiber were to be made.

In the present invention, one or more yarns 26, composed of the fibrils 28 or nanotubes 28, are embedded in a cylindrical form of a conventional fiber base material 32 to create the hybrid fiber 34. In the example to follow, glass is the conventional fiber base material 32. However, it should be understood that any of the conventional fiber base materials may also be used, such as polyethylene or other polymers, including thermoset base materials and thermoplastic base materials.

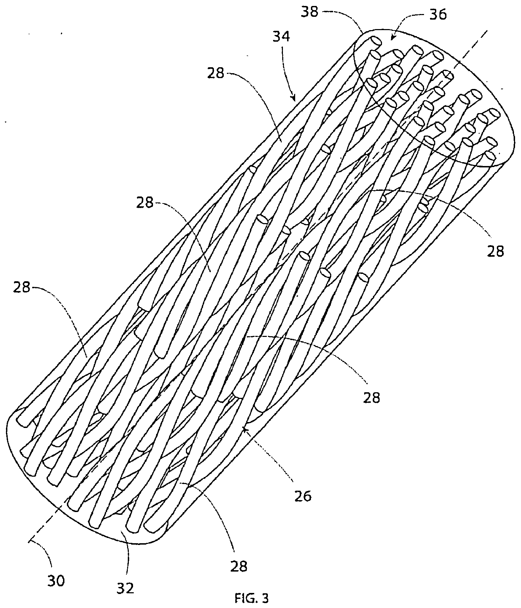

Figure 3 is a representation of a possible structure of the portion of the overall length of a hybrid fiber 34. The hybrid fiber 34 basically consists of a continuous phase of the fiber base material 32, in which one or more of the reinforcing yarns 26 comprised of fibrils or nanotubes 28 are embedded. The continuous phase base material 32 is represented as being transparent in Figure 3 for clarity in showing the interior of the hybrid fiber 34. It is not necessary that the base material 32 be transparent.

The base material 32 covers the plurality of fibrils or nanotubes 28 and permeates or is infused into the fibrils or nanotubes 28 along the length of the hybrid fiber 34. The plurality of fibrils or nanotubes 28 are primarily contained in the interior of the base material 32 that makes up the hybrid fiber 34. However, it is possible that at least some of the fibrils or nanotubes 28 would be positioned on the generally cylindrical exterior surface 38 of the hybrid fiber 34. Although the terminal ends of some of the fibrils are shown at uniform locations in Figure 3, in reality the terminal end locations would be random.

It should be appreciated that composing or interweaving the plurality of fibrils or nanotubes 28 in a yarn 26 enables a much greater density of the fibrils or nanotubes than if a collection of fibrils or nanotubes 28 were individually embedded in the yarn 26, for example in the embodiment represented in Figure 1. The intertwining of the fibrils or nanotubes 28 within the yarn 26 keeps the fibrils or nanotubes in relatively tight geometry, although there is sufficient space between adjacent fibrils or nanotubes 28 for the continuous phase base material 32 to infuse within the yarn 26 and make intimate contact with all of the fibrils or nanotubes 28. Appropriate surface energetics (i.e., wetting) will aid this. The volume percentage of the plurality of nanotubes in the hybrid fiber is in a range of 30% to 80%.

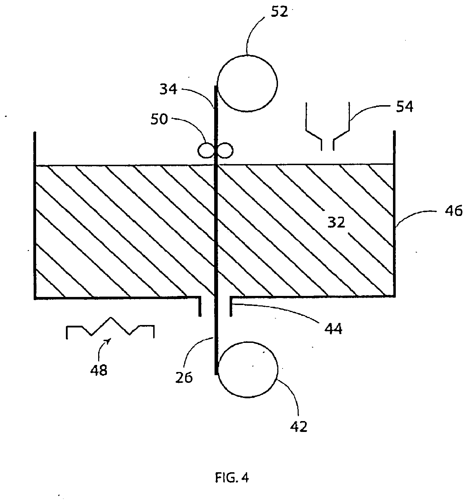

Figure 4 is a representation of a method of making the hybrid fiber 34 of the invention. In the method of Figure 4, the fibrils or nanotube 28 reinforcement of the hybrid fiber 34 consists of a single yarn 26 formed from a plurality of nanotubes. The yarn 26 is pulled through a "molten" bath of the continuous phase base material 32. By "molten", it is intended that the base material 32 be flowable like a liquid, although it may have a high viscosity. It is therefore intended that the base material 32 described with reference to Figure 4 cover any type of known base material including glass, thermoset base materials and thermoplastic base materials.

In Figure 4, the yarn 26 passes from a supply reel 42 through a nozzle 44 and into the interior of a container 46 that contains a molten bath of continuous phase base material 32. A heater 48 controls the temperature of the bath of base material 32. While in the bath of base material, the yarn 26 is infused by the continuous phase base material 32, which wets the fibrils or nanotubes 28 composing the yarn 26. Upon exiting the bath of base material 32 from the top surface of the bath, the fibrils or nanotubes 28 in the yarn 26 and the infused base material 32 pass through an optional ring 50. The ring 50 scrapes off any excess continuous phase base material 32. The fibrils or nanotubes 28 and the infused base material 32 are then allowed to cool below the solidification temperature of the base material 32 and to solidify. This forms the hybrid fiber 34.

The hybrid fiber 34 is then wound on a take up reel 52. To form a quasi-continuous process, a hopper 54 may add extra base material 32, either in molten form or as solid pellets that are melted by the heat of the bath of base material 32.

The inner diameter of the nozzle 44 on the container 46 must be large enough to allow the yarn 26 to easily pass through the nozzle 44, but must not be so large that the molten bath of base material 32 can drip out through the nozzle 44. In general, the surface tension of the molten bath of base material 32 would be enough to prevent the unwanted dripping of the base material 32 through the nozzle 44 if the diameter of the nozzle 44 is between 1-2 mm. This will allow easy passage of yarns of diameters up to almost 1 mm. Most yarn diameters of interest will be 5-20 microns.

The method represented in Figure 4 may also be used with multiple yarns that are gathered together in a tow. Additionally, the method could proceed in the opposite direction to that described above, i.e., from reel 52 to reel 42. In such a method the optional ring 50 would be moved below the nozzle 44.

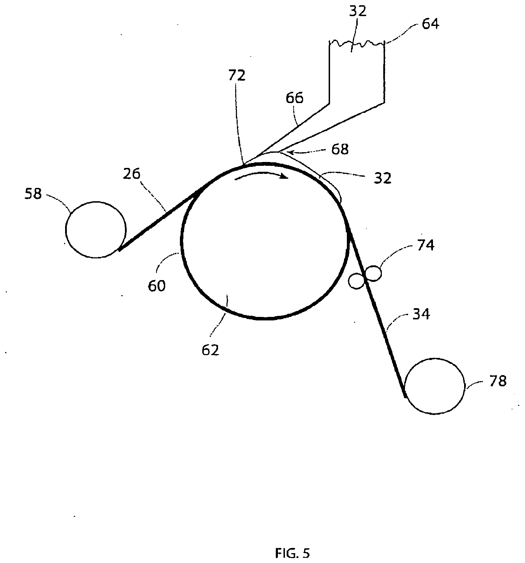

Figure 5 is a representation of a further method of making the hybrid fiber 34 of the invention. In the method of Figure 5, the fibril or nanotube 28 reinforcement of the hybrid fiber 34 consists of a single yarn 26 formed from a plurality of the nanotubes. The yarn 26 is pulled over a surface of a heated roller and "molten" continuous phase base material 32 is poured onto the roller and is infused into the yarn. Again, by "molten", it is intended that the base material 32 be flowable like a liquid, although it may have a high viscosity. It is therefore intended that the base material 32 described with reference to Figure 5 cover any type of known base material including glass, thermoset base materials and thermoplastic base materials.

In Figure 5, the yarn 26 leaves a supply reel 58 and travels over part of a cylindrical exterior surface 60 of a combining wheel 62 which is rotating in a clockwise direction as viewed in Figure 5. A container 64 holding the molten base material 32 is positioned above the combining wheel exterior surface 60. The container 64 has a spout 66 that extends downwardly from the container to a nozzle 68 at the distal end of the spout. The nozzle 68 is positioned just above the combining wheel exterior surface 60 and a portion 72 of the yarn on the surface. The molten base material 32 passes through the spout 66 and the nozzle 68 and drops onto the portion of yarn 72 on the combining wheel exterior surface 60. The base material 32 dropped onto the portion of yarn 72 coats the portion of yarn and is infused into the plurality of fibrils or nanotubes 28 that form the yarn.

The portion of the yarn 72 that has been coated and infused with the base material 32 then leaves the combining wheel exterior surface 60 and passes through an optional ring 74. The ring 74 scrapes excess base material 32 from the portion of yarn 72 and gives the cylindrical exterior surface shape to the hybrid fiber 34. The resulting hybrid fiber 34 then passes onto a take up reel 78.

The combining wheel 62 may be heated to prevent the base material dropped onto the portion of the yarn 72 from beginning to solidify until the portion of yarn 72 coated and infused with the base material leaves the combining wheel exterior surface 60.

In a quasi-continuous process, the supply reel 58 and the take up reel 78 rotate synchronously so that the yarn travels at a constant speed throughout the process.

The method represented in Figure 5 may also be used with multiple yarns that are gathered together in a tow.

According to an aspect of the present disclosure there is provided a hybrid fiber comprising a base material permeating a length of the hybrid fiber; and a plurality of nanotubes distributed throughout the base material and interwoven into a yarn that extends the length of the hybrid fiber, each nanotube of the plurality of nanotubes having a length that is aligned with the length of the hybrid fiber and is a fraction of the length of the hybrid fiber. Advantageously the plurality of nanotubes are carbon nanotubes. Advantageously the hybrid fiber comprises a volume percentage of the plurality of nanotubes in the hybrid fiber being in a range of 30 percent to 80 percent.

According to an aspect of the present disclosure there is provided a hybrid fiber comprising a base material (12) permeating an interior of the hybrid fiber and a length of the hybrid fiber; and a plurality of fibrils (20) distributed throughout the base material (12), each fibril of the plurality of fibrils (20) having a length that is a fraction of the hybrid fiber length and is aligned with the hybrid fiber length; and the plurality of fibrils (20) being formed into a yarn (26) with the base material (12) being infused into the yarn (26). Advantageously the hybrid fiber is one of a plurality of hybrid fibers that are imbedded in a composite material.

According to an aspect of the present disclosure there is provided a method of making a hybrid fiber comprising aligning and overlapping a plurality of fibrils forming a continuous strand having a strand length where each fibril of the plurality of fibrils has a fibril length that is aligned with the strand length and is a fraction of the strand length successively coating the strand with a liquid base material and infusing the liquid base material into the plurality of fibrils forming the strand; and, allowing the liquid base material coating the strand and infused in the plurality of fibrils forming the strand to solidify resulting in the hybrid fiber.

Advantageously the method further comprises pulling the strand over a surface; pouring the liquid base material onto the surface and the strand and thereby successively coating the strand with the liquid base material and infusing the liquid base material into the plurality of fibrils forming the strand; pulling the strand from the surface; and allowing the liquid base material coating the strand and infused in the plurality of fibrils forming the strand to solidify resulting in the hybrid fiber. Advantageously the method further comprises using a rotating cylindrical surface as the surface.

Other methods of infusing the yarn with base material could also be employed, such as chemical vapor deposition (CVD) or physical vapor deposition (PVD).

As various modifications could be made in the constructions of the hybrid fiber and the methods of making the hybrid fiber described herein and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above described exemplary embodiments, but should be defined only in accordance with the following claims appended hereto.

## Claims

1. A hybrid fiber (10) comprising:
a base material (12) permeating an interior of the hybrid fiber (10) and a length of the hybrid fiber (10); and,
a plurality of fibrils (28) distributed throughout the base material (12), each fibril of the plurality of fibrils (28) having a length that is a fraction of the hybrid fiber length and is aligned with the hybrid fiber length; and
the plurality of fibrils (28) being formed into a yarn (26) with the base material (12) being infused into the yarn (26) wherein:
a volume percentage of the plurality of fibrils (28) in the hybrid fiber is in a range of 30 percent to 80 percent.

2. The hybrid fiber (10) of claim 1, further comprising:
each fibril (28) of the plurality of fibrils being a nanotube.

3. The hybrid fiber (10) of claim 1, further comprising:
each fibril (28) of the plurality of fibrils being a carbon nanotube.

4. The hybrid fiber (10) of claim 1, further comprising:
each fibril (28) of the plurality of fibrils being silicon carbide.

5. The hybrid fiber (10) of any of claims 1-4, further comprising:
the base material (12) being a polymer.

6. The hybrid fiber (10) of any of claims 1-4, further comprising:
the base material (12) being glass.

7. A method of making a hybrid fiber (10) comprising:
aligning and overlapping a plurality of fibrils (28) forming a continuous yarn (26) having a yarn length where each fibril of the plurality of fibrils (28) has a fibril length that is aligned with the yarn length and is a fraction of the yarn length;
successively coating the yarn (26) with a liquid base material (12) and infusing the liquid base material (12) into the plurality of fibrils (28) forming the yarn (26); and,
allowing the liquid base material (12) coating the yarn (26) and infused in the plurality of fibrils (28) forming the yarn (26) to solidify resulting in the hybrid fiber such that a volume percentage of the plurality of fibrils (28) in the hybrid fiber is in a range of 30 percent to 80 percent.

8. The method of claim 7, further comprising:
twisting the plurality of fibrils (28) together and forming the yarn (26).

9. The method of claims 7 and 8, further comprising:
using a plurality of nanotubes as the plurality of fibrils (28).

10. The method of any of claims 7 to 9, further comprising:
using a glass as the base material (12).

11. The method of any of claims 7 to 10, further comprising:
containing the liquid base material (12) in a container having a nozzle (68);
pulling the yarn (26) through the nozzle (68) and into the liquid base material (12) in the container and thereby successively coating the yarn (26) with the liquid base material (12) and infusing the liquid base material (12) into the plurality of fibrils (20) forming the yarn;
pulling the yarn from the liquid base material (12); and,
allowing the liquid base material (12) coating the yarn (26) and infused in the plurality of fibrils (28) forming the strand to solidify resulting in the hybrid fiber (10).

12. The method of any of claims 7 to 11, further comprising: pulling the yarn (26) over a surface;
pouring the liquid base material (12) onto the surface and the yarn (26) and thereby successively coating the yarn (26) with the liquid base material (12) and infusing the liquid base material (12) into the plurality of fibrils (28) forming the yarn (26);
pulling the yarn (26) from the surface; and,
allowing the liquid base material (12) coating the yarn (26) and infused in the plurality of fibrils (28) forming the yarn (26) to solidify resulting in the hybrid fiber (10).

## Patentansprüche

1. Hybridfaser (10), umfassend:
ein Basismaterial (12), das ein Inneres der Hybridfaser (10) und eine Länge der Hybridfaser (10) durchdringt; und,
eine Mehrzahl von Fibrillen (28), die über das Basismaterial (12) verteilt sind, wobei jede Fibrille der Mehrzahl von Fibrillen (28) eine Länge aufweist, die einen Bruchteil der Hybridfaserlänge beträgt und mit der Hybridfaserlänge ausgerichtet ist; und
wobei die Mehrzahl von Fibrillen (28) zu einem Garn (26) geformt ist und das Basismaterial (12) in das Garn (26) infundiert ist, wobei
ein Volumenprozentsatz der Mehrzahl von Fibrillen (28) in der Hybridfaser in einem Bereich von 30 Prozent bis 80 Prozent liegt.

2. Hybridfaser (10) nach Anspruch 1, bei der ferner:
jede Fibrille (28) der Mehrzahl von Fibrillen ein Nanoröhrchen ist.

3. Hybridfaser (10) nach Anspruch 1, bei der ferner:
jede Fibrille (28) der Mehrzahl von Fibrillen ein Kohlenstoff-Nanoröhrchen ist.

4. Hybridfaser (10) nach Anspruch 1, bei der ferner:
jede Fibrille (28) der Mehrzahl von Fibrillen Siliciumcarbid ist.

5. Hybridfaser (10) nach einem der Ansprüche 1-4, bei der ferner:
das Basismaterial (12) ein Polymer ist.

6. Hybridfaser (10) nach einem der Ansprüche 1-4, bei der ferner:
das Basismaterial (12) Glas ist.

7. Verfahren zur Herstellung einer Hybridfaser (10), umfassend:
Ausrichten und Überlappen einer Mehrzahl von Fibrillen (28), die ein Endlosgarn (26) mit einer Garnlänge bilden, wobei jede Fibrille der Mehrzahl von Fibrillen (28) eine Fibrillenlänge aufweist, die mit der Garnlänge ausgerichtet ist und einen Bruchteil der Garnlänge ausmacht;
sukzessives Beschichten des Garns (26) mit einem flüssigen Basismaterial (12) und Infundieren des flüssigen Basismaterials (12) in die Mehrzahl von Fibrillen (28), die das Garn (26) bilden; und
Verfestigenlassen des flüssigen Basismaterials (12), das das Garn (26) beschichtet und in die Mehrzahl von Fibrillen (28), die das Garn (26) bilden, infundiert ist, wodurch die Hybridfaser entsteht, bei der ein Volumenprozentsatz der Mehrzahl von Fibrillen (28) in der Hybridfaser in einem Bereich von 30 Prozent bis 80 Prozent liegt.

8. Verfahren nach Anspruch 7, weiter umfassend:
Verzwirnen der Mehrzahl von Fibrillen (28) miteinander und Bilden des Garns (26).

9. Verfahren nach den Ansprüchen 7 und 8, weiter umfassend:
Verwenden einer Mehrzahl von Nanoröhrchen als die Mehrzahl von Fibrillen (28).

10. Verfahren nach einem der Ansprüche 7 bis 9, weiter umfassend:
Verwenden eines Glases als Basismaterial (12).

11. Verfahren nach einem der Ansprüche 7 bis 10, ferner umfassend:
Aufnehmen des flüssigen Basismaterials (12) in einem Behälter mit einer Düse (68);
Ziehen des Garns (26) durch die Düse (68) und in das flüssige Basismaterial (12) in dem Behälter und dadurch sukzessives Beschichten des Garns (26) mit dem flüssigen Basismaterial (12) und Infundieren des flüssigen Basismaterials (12) in die Mehrzahl von Fibrillen (20), die das Garn bilden;
Ziehen des Garns aus dem flüssigen Basismaterial (12); und
Verfestigenlassen des flüssigen Basismaterials (12), das das Garn (26) beschichtet und in die Mehrzahl von den Strang bildenden Fibrillen (28) infundiert ist, wodurch die Hybridfaser (10) entsteht.

12. Verfahren nach einem der Ansprüche 7 bis 11, weiter umfassend:
Ziehen des Garns (26) über eine Oberfläche;
Gießen des flüssigen Basismaterials (12) auf die Oberfläche und das Garn (26) und dadurch sukzessives Beschichten des Garns (26) mit dem flüssigen Basismaterial (12) und Infundieren des flüssigen Basismaterials (12) in die Mehrzahl von Fibrillen (28), die das Garn (26) bilden;
Ziehen des Garns (26) von der Oberfläche; und
Verfestigenlassen des flüssigen Basismaterials (12), das das Garn (26) beschichtet und in die Mehrzahl von den Strang bildenden Fibrillen (28) infundiert ist, wodurch die Hybridfaser (10) entsteht.

## Revendications

1. Fibre hybride (10) comprenant :
un matériau de base (12) imprégnant l'intérieur de la fibre hybride (10) et une longueur de la fibre hybride (10) ; et,
une pluralité de fibrilles (28) réparties dans tout le matériau de base (12), chaque fibrille de la pluralité de fibrilles (28) ayant une longueur qui est une fraction de la longueur de fibre hybride et est alignée avec la longueur de fibre hybride ; et
la pluralité de fibrilles (28) étant formées en un fil (26), le matériau de base (12) étant injecté dans le fil (26) dans laquelle :
un pourcentage en volume de la pluralité de fibrilles (28) dans la fibre hybride se situe dans une plage de 30 % à 80 %.

2. Fibre hybride (10) selon la revendication 1, comprenant en outre :
chaque fibrille (28) de la pluralité de fibrilles étant un nanotube.

3. Fibre hybride (10) selon la revendication 1, comprenant en outre :
chaque fibrille (28) de la pluralité de fibrilles étant un nanotube de carbone.

4. Fibre hybride (10) selon la revendication 1, comprenant en outre :
chaque fibrille (28) de la pluralité de fibrilles étant du carbure de silicium.

5. Fibre hybride (10) selon l'une quelconque des revendications 1 à 4, comprenant en outre :
le matériau de base (12) étant un polymère.

6. Fibre hybride (10) selon l'une quelconque des revendications 1 à 4, comprenant en outre :
le matériau de base (12) étant du verre.

7. Procédé de fabrication d'une fibre hybride (10), comprenant les étapes consistant à :
aligner et mettre en chevauchement une pluralité de fibrilles (28) formant un fil continu (26) ayant une longueur de fil où chaque fibrille de la pluralité de fibrilles (28) a une longueur de fibrille qui est alignée avec la longueur de fil et est une fraction de la longueur de fil ;
revêtir successivement le fil (26) d'un matériau de base liquide (12) et injecter le matériau de base liquide (12) dans la pluralité de fibrilles (28) formant le fil (26) ; et,
laisser le matériau de base liquide (12) enrobant le fil (26) et infusé dans la pluralité de fibrilles (28) formant le fil (26) se solidifier, ce qui donne la fibre hybride de sorte qu'un pourcentage en volume de la pluralité de fibrilles (28) dans la fibre hybride se situe dans une fourchette de 30 à 80 pour cent.

8. Procédé selon la revendication 7, comprenant en outre l'étape consistant à :
torsader la pluralité de fibrilles (28) ensemble et former le fil (26).

9. Procédé selon les revendications 7 et 8, comprenant en outre l'étape consistant à :
utiliser une pluralité de nanotubes en tant que pluralité de fibrilles (28).

10. Procédé selon l'une quelconque des revendications 7 à 9, comprenant en outre les étapes consistant à :
utiliser un verre comme matériau de base (12).

11. Procédé selon l'une quelconque des revendications 7 à 10, comprenant en outre les étapes consistant à :
contenir le matériau de base liquide (12) dans un contenant ayant une buse (68) ;
tirer le fil (26) à travers la buse (68) et jusque dans le matériau de base liquide (12) dans le contenant, et revêtir ainsi successivement le fil (26) avec le matériau de base liquide (12) et injecter le matériau de base liquide (12) dans la pluralité de fibrilles (20) formant le fil ;
tirer le fil à partir du matériau de base liquide (12) ; et,
autoriser le matériau de base liquide (12) recouvrant le fil (26) et injecté dans la pluralité de fibrilles (28) formant le fil (26) se solidifier, en ayant pour résultat la fibre hybride (10).

12. Procédé selon l'une quelconque des revendications 7 à 11, comprenant en outre les étapes consistant à :
tirer le fil (26) sur une surface ;
verser le matériau de base liquide (12) sur la surface et le fil (26), et revêtir ainsi successivement le fil (26) avec le matériau de base liquide (12) et injecter le matériau de base liquide (12) dans la pluralité de fibrilles (28) formant le fil ;
tirer le fil (26) à partir de la surface ; et,
autoriser le matériau de base liquide (12) recouvrant le fil (26) et injecté dans la pluralité de fibrilles (28) formant le fil (26) se solidifier, en ayant pour résultat la fibre hybride (10).
